(19) Europäisches Patentamt
European Patent Office
Office européen des brevets

(11) EP 4 755 977 A1

(12) **EUROPEAN PATENT APPLICATION**
published in accordance with Art. 153(4) EPC

(43) Date of publication:
**10.06.2026 Bulletin 2026/24**

(21) Application number: **24851693.2**

(22) Date of filing: **30.07.2024**

(51) International Patent Classification (IPC):
***C09C 1/48*** (2006.01) ***B60C 1/00*** (2006.01)
***B60C 15/06*** (2006.01) ***C08C 19/08*** (2006.01)
***C08J 11/10*** (2006.01) ***C08K 3/04*** (2006.01)
***C08L 17/00*** (2006.01) ***C08L 21/00*** (2006.01)
***C09C 1/56*** (2006.01)

(52) Cooperative Patent Classification (CPC):
**B60C 1/00; B60C 15/06; C08C 19/08; C08J 11/10; C08K 3/04; C08L 17/00; C08L 21/00; C09C 1/48; C09C 1/56**

(86) International application number:
**PCT/JP2024/027230**

(87) International publication number:
**WO 2025/033268 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023 JP 2023128068**

(71) Applicants:
- **BRIDGESTONE CORPORATION**
  **Chuo-ku**
  **Tokyo 104-8340 (JP)**
- **National Institute of Advanced Industrial Science and Technology**
  **Chiyoda-ku**
  **Tokyo 100-8921 (JP)**
- **Tohoku University**
  **Sendai-shi, Miyagi 980-8577 (JP)**

(72) Inventors:
- **HOJO Masahiro**
  **Tokyo 104-8340 (JP)**
- **HOMMA Masahiro**
  **Tokyo 104-8340 (JP)**
- **TAHARA Seiichi**
  **Tokyo 104-8340 (JP)**
- **FUKAYA Norihisa**
  **Tsukuba-shi, Ibaraki 305-8561 (JP)**
- **WAHYU Satpriyo Putro**
  **Tsukuba-shi, Ibaraki 305-8561 (JP)**
- **UEDA Yoshihiro**
  **Tsukuba-shi, Ibaraki 305-8561 (JP)**
- **CHOI Jun-Chul**
  **Tsukuba-shi, Ibaraki 305-8561 (JP)**
- **YAMASHITA Hiroshi**
  **Tsukuba-shi, Ibaraki 305-8561 (JP)**
- **HATORI Makiko**
  **Tsukuba-shi, Ibaraki 305-8561 (JP)**
- **SUGIKI Makoto**
  **Tsukuba-shi, Ibaraki 305-8561 (JP)**
- **TANAKA Hisanori**
  **Tsukuba-shi, Ibaraki 305-8561 (JP)**
- **KAMEI Naoki**
  **Tsukuba-shi, Ibaraki 305-8561 (JP)**
- **YOSHIOKA Toshiaki**
  **Sendai-shi, Miyagi 980-8577 (JP)**
- **KUMAGAI Shogo**
  **Sendai-shi, Miyagi 980-8577 (JP)**

(74) Representative: **Marks & Clerk LLP**
**15 Fetter Lane**
**London EC4A 1BW (GB)**

(54) **RECYCLED CARBON BLACK, MIXTURE OF RECYCLED CARBON BLACK AND LIQUID POLYMER, RUBBER COMPOSITION, AND RUBBER PRODUCT**

(57) To address a problem of providing recovered carbon black capable of maintaining the physical properties of a rubber composition even when reused in the rubber composition, and also providing a mixture of such recovered carbon black and a liquid polymer, a solution is: recovered carbon black obtained by decomposition of





**(Cont. next page)**

crosslinked rubber containing diene rubber and carbon black, wherein a proportion of aggregates having a diameter of 5 μm or more, as determined using a particle size analyzer in a state where the recovered carbon black is dispersed ultrasonically in toluene solvent, is 50 vol% or less; and a mixture of such recovered carbon black and a liquid polymer, wherein the liquid polymer has a weight-average molecular weight of 300,000 or less.

**Description**

TECHNICAL FIELD

The present disclosure relates to recovered carbon black, a mixture of recovered carbon black and a liquid polymer, a rubber composition, and a rubber product.

BACKGROUND

Conventionally, rubber products mainly composed of crosslinked rubber such as vulcanized rubber are difficult to reuse, and after the end of their product life, they are often reused as fuel, particularly in cement plants and the like. However, in recent years, with the increasing focus on environmental issues, there is a demand for the development of methods for reusing materials obtained by decomposing rubber products, rather than incinerating rubber products as fuel.

As methods for decomposing crosslinked rubber, various methods are known. For example, PTL 1 discloses thermally decomposing organic materials such as used tires at 550°C to 800°C, and further discloses compounding the carbon black obtained by thermal decomposition as a filler in a rubber mixture.

CITATION LIST

Patent Literature

PTL 1: EP 3427975 A1

SUMMARY

(Technical Problem)

Generally, since rubber products made of crosslinked rubber use a rubber composition comprising a diene rubber and a filler such as carbon black, it is possible to recover carbon black by decomposing the crosslinked rubber, as described in PTL 1 above. In addition, the present inventors have found that, by selecting the decomposition conditions of the crosslinked rubber, it is possible to obtain not only carbon black but also constituent monomers and oligomers (liquid polymers) of the diene rubber.

However, when the recovered carbon black obtained by decomposition of crosslinked rubber is reused in a rubber composition, there is a problem in that the physical properties of the resulting rubber composition deteriorate.

Accordingly, the present disclosure addresses the above conventional problems and aims to provide recovered carbon black capable of maintaining the physical properties of a rubber composition even when reused in the rubber composition.

Further, the present disclosure also aims to provide a mixture of such recovered carbon black and a liquid polymer, as well as a rubber composition and a rubber product containing such recovered carbon black.

(Solution to Problem)

The gist configuration of the recovered carbon black, the mixture of recovered carbon black and a liquid polymer, the rubber composition, and the rubber product of the present disclosure for solving the above problems is as follows.

[1] Recovered carbon black obtained by decomposition of crosslinked rubber containing diene rubber and carbon black, wherein
a proportion of aggregates having a diameter of 5 μm or more, as determined using a particle size analyzer in a state where the recovered carbon black is dispersed ultrasonically in toluene solvent, is 50 vol% or less.
[2] The recovered carbon black according to [1], wherein a proportion of aggregates having a diameter of 1 μm or less, as determined using a particle size analyzer in a state where the recovered carbon black is dispersed ultrasonically in toluene solvent, is 50 vol% or more.
[3] The recovered carbon black according to [1] or [2], wherein a sulfur component and a zinc component are adhered to a surface of the recovered carbon black.
[4] A mixture of recovered carbon black and a liquid polymer obtained by decomposition of crosslinked rubber containing diene rubber and carbon black, wherein

the recovered carbon black is the recovered carbon black according to [1] (in other words, recovered carbon black

in which the proportion of aggregates having a diameter of 5 μm or more, as determined using a particle size analyzer in a state where the recovered carbon black is dispersed ultrasonically in toluene solvent, is 50 vol% or less), and
the liquid polymer has a weight-average molecular weight of 300,000 or less.

[5] A mixture of recovered carbon black and a liquid polymer obtained by decomposition of crosslinked rubber containing diene rubber and carbon black, wherein

the recovered carbon black is the recovered carbon black according to [1] (in other words, recovered carbon black in which the proportion of aggregates having a diameter of 5 μm or more, as determined using a particle size analyzer in a state where the recovered carbon black is dispersed ultrasonically in toluene solvent, is 50 vol% or less), and
the proportion of components having a molecular weight of 15,000 or less in the liquid polymer is 30 mass% or less.

[6] The mixture of recovered carbon black and a liquid polymer according to [4] or [5], wherein the recovered carbon black has a proportion of aggregates having a diameter of 1 μm or less, as determined using a particle size analyzer in a state where the recovered carbon black is dispersed ultrasonically in toluene solvent, of 50 vol% or more.
[7] The mixture of recovered carbon black and a liquid polymer according to [4] or [5], wherein a sulfur component and a zinc component are adhered to a surface of the recovered carbon black.
[8] A rubber composition comprising a rubber component and the recovered carbon black according to [1].
[9] A rubber composition comprising a rubber component and the mixture of recovered carbon black and a liquid polymer according to [4].
[10] A rubber composition comprising a rubber component and the mixture of recovered carbon black and a liquid polymer according to [5].
[11] The rubber composition according to any one of [8] to [10], wherein the rubber composition is for use in a tire.
[12] A rubber product comprising a rubber member formed from the rubber composition according to any one of [8] to [10].
[13] The rubber product according to [12], wherein the rubber product is a tire.

(Advantageous Effect)

According to the present disclosure, it is possible to provide recovered carbon black capable of maintaining the physical properties of a rubber composition even when reused in the rubber composition.
Further, according to the present disclosure, it is possible to provide a mixture of such recovered carbon black and a liquid polymer, as well as a rubber composition and a rubber product containing such recovered carbon black.

DETAILED DESCRIPTION

Hereinafter, the recovered carbon black, the mixture of recovered carbon black and a liquid polymer, the rubber composition, and the rubber product of the present disclosure will be illustrated and described in detail based on embodiments thereof.

<Definitions>

The compounds described in this specification may be partially or entirely derived from fossil resources, derived from biological resources such as plant resources, or derived from recycled resources such as used tires. Furthermore, they may be derived from a mixture of any two or more of fossil resources, biological resources, and recycled resources.

<Recovered Carbon Black>

The recovered carbon black of the present embodiment is recovered carbon black obtained by decomposition of crosslinked rubber containing diene rubber and carbon black, without any limitations on the decomposition method or conditions. The recovered carbon black of the present embodiment is characterized in that the proportion of aggregates having a diameter of 5 μm or more is 50 vol% or less, and it is preferable that the proportion of aggregates having a diameter of 1 μm or less is 50 vol% or more.
As described above, conventional recovered carbon black obtained by decomposition of crosslinked rubber, when reused in a rubber composition, causes a decrease in the physical properties of the resulting rubber composition. As

a result of diligent investigation, the present inventors have found that conventional recovered carbon black contains a high proportion of aggregates having a diameter of 5 μm or more, whereas, by reusing recovered carbon black in which the proportion of aggregates having a diameter of 5 μm or more is 50 vol% or less, and preferably the proportion of aggregates having a diameter of 1 μm or less is 50 vol% or more, in a rubber composition, the tensile strength (TB) of the resulting rubber composition can be maintained. Although not wishing to be bound by theory, it is considered that the recovered carbon black of the present embodiment, by having a proportion of aggregates having a diameter of 5 μm or more of 50 vol% or less, improves the dispersibility in the rubber component of the rubber composition, thereby maintaining the physical properties of the rubber composition. Furthermore, it is considered that, by having a proportion of aggregates having a diameter of 1 μm or less of 50 vol% or more, the recovered carbon black further improves dispersibility in the rubber component of the rubber composition, thereby more reliably maintaining the physical properties of the rubber composition.

(Sulfur Component and Zinc Component)

It is preferable that the recovered carbon black of the present embodiment has a sulfur component and a zinc component adhered to its surface. Recovered carbon black with a sulfur component and a zinc component adhered to its surface can be obtained without washing or surface treatment of the carbon black.

Generally, since crosslinked rubber contains sulfur as a crosslinking agent and zinc oxide as a crosslinking coagent, recovered carbon black obtained by decomposing crosslinked rubber under relatively mild conditions has a sulfur component and a zinc component adhered to its surface, and it is preferable that the recovered carbon black of the present embodiment is recovered carbon black obtained by decomposition under such mild conditions.

In this specification, whether a sulfur component and/or a zinc component is adhered to the surface of the recovered carbon black is confirmed by transmission electron microscopy-energy dispersive X-ray spectroscopy (TEM-EDS). This confirmation is performed without any process for removing inorganic substances such as separation, washing, or surface treatment of the product obtained by pyrolysis.

(Proportion of Aggregates)

The recovered carbon black of the present embodiment has a proportion of aggregates having a diameter of 5 μm or more of 50 vol% or less. If the proportion of aggregates having a diameter of 5 μm or more in the recovered carbon black exceeds 50 vol%, the physical properties of the resulting rubber composition decrease when reused in a rubber composition. In the recovered carbon black of the present embodiment, the proportion of aggregates having a diameter of 5 μm or more is 50 vol% or less, preferably 40 vol% or less, more preferably 30 vol% or less, particularly preferably 20 vol% or less, and may even be 0 vol%. Furthermore, in the recovered carbon black of the present embodiment, it is preferable that the proportion of aggregates having a diameter of 1 μm or less is 50 vol% or more. When the proportion of aggregates having a diameter of 1 μm or less in the recovered carbon black is 50 vol% or more, the physical properties of the resulting rubber composition are excellent when the recovered carbon black is reused in a rubber composition. In the recovered carbon black of the present embodiment, the proportion of aggregates having a diameter of 1 μm or less is preferably 50 vol% or more, more preferably 60 vol% or more, even more preferably 70 vol% or more, and particularly preferably 80 vol% or more.

In this specification, the "proportion of aggregates having a diameter of 5 μm or more" and the "proportion of aggregates having a diameter of 1 μm or less" of the recovered carbon black can be measured by the following method.

A dispersion of the recovered carbon black to be tested is prepared in toluene solvent at an optimal concentration (0.1-5 wt%), and after dispersing for 5-30 minutes using an ultrasonic cleaner with an output of 120 W and a frequency of 40 kHz, the particle size distribution is measured at room temperature using "Mastersizer 3000" and "Hydro SV" (both manufactured by Malvern Panalytical), by filling the cell of "Hydro SV" with toluene as the solvent, and adding the toluene dispersion of the recovered carbon black to be tested while stirring with a stirrer at 500-1000 rpm until the scattering intensity reaches a value of 10-20%. The recovered carbon black to be tested is treated as non-spherical particles, with a refractive index of 1.746, and the refractive index of toluene is set to 1.49 for the measurement of particle size distribution. From the profile of the obtained particle size distribution, the proportion of aggregates having a diameter of 5 μm or more and the proportion of aggregates having a diameter of 1 μm or less in the recovered carbon black to be tested are determined.

(Organic Content)

It is preferable that the recovered carbon black of the present embodiment has an organic content remaining in the recovered carbon black after toluene washing of 5 mass% or more. When the organic content of the recovered carbon black is 5 mass% or more, the decrease in the physical properties of the resulting rubber composition can be further

suppressed when the recovered carbon black is reused in a rubber composition. 50 mass% or more of the organic content is a diene polymer, preferably 80 mass% or more, and more preferably 90 mass% or more.

The "organic content" of the recovered carbon black can be calculated by thermogravimetric analysis (TGA) as follows: the mass ($m_0$) after heating the recovered carbon black to be tested to 120°C and holding for 1 hour, and the mass ($m_1$) after subsequently heating to 550°C and holding for 2 hours, are used in the following formula:

$$\text{Organic content (mass\%)} = (m_0 - m_1) / m_0 \times 100$$

(Maximum DTG Temperature)

It is preferable that the recovered carbon black of the present embodiment has a maximum DTG temperature (the temperature at which a DTA value accompanying weight loss of organic content in thermogravimetric measurement is at a maximum) of 350°C or higher. Recovered carbon black with a maximum DTG temperature of 350°C or higher has a high proportion of organic content remaining up to high temperatures of 350°C or higher, and since dispersibility in the rubber component is high, the physical properties of the resulting rubber composition can be more reliably maintained even when the recovered carbon black is reused in a rubber composition.

The DTG (differential thermogravimetric) curve is the first derivative curve of the TG (thermogravimetric) curve, and the maximum DTG temperature corresponds to the temperature at which the weight loss of the organic content is fastest.

(Dispersion Stability)

It is preferable that the recovered carbon black of the present embodiment has a dispersion stability in toluene of 0.5 or higher. When the dispersion stability of the recovered carbon black in toluene is 0.5 or higher, the physical properties of the resulting rubber composition can be more reliably maintained when the recovered carbon black is reused in a rubber composition.

The "dispersion stability in toluene" of the recovered carbon black can be measured using "LUMiSizer®-611" (LUMiSizer is a registered trademark in Japan, other countries, or both) (manufactured by LUM). The recovered carbon black or carbon black to be tested is dispersed in toluene at 5 wt% using an ultrasonic cleaner at an output of 120 W and a frequency of 40 kHz for 30 minutes, and the dispersion is added to a polyamide sample tube with a transmission section thickness of 2 mm, then dispersed for 5 minutes in an ultrasonic cleaner at an output of 120 W and a frequency of 38 kHz. The transmittance obtained in 6× sensitivity mode using a light source with a wavelength of 865 nm is analyzed. The dispersion stability in toluene is determined by measuring the transmittance at device positions 110 mm to 125 mm at a constant rotation speed, calculating the rate of change of transmittance over time, and treating the reciprocal of this value as the dispersion stability. The larger the value of dispersion stability, the higher the dispersion stability in toluene is judged to be.

(Crosslinked Rubber)

The crosslinked rubber serving as the raw material for the recovered carbon black of the present embodiment contains diene rubber and carbon black, and may further contain other components. The recovered carbon black of the present embodiment is obtained by decomposition of such crosslinked rubber.

The crosslinked rubber used for decomposition may be grouped in advance according to the type of diene rubber blended, and the decomposition process may be performed for each group. Alternatively, grouping may be performed in advance according to the type of filler blended (for example, type of carbon black, type of silica, mixing ratio of carbon black and silica, etc.), and the decomposition process may be performed for each group. Furthermore, both grouping by type of diene rubber and grouping by type of filler may be performed, and the decomposition process may be performed for each group. When the decomposition process is performed for each group in this way, a liquid polymer, recovered carbon black, recovered silica, etc. having more uniform physical properties can be obtained, and when blended again into a rubber composition, a rubber composition with better performance can be obtained.

Furthermore, when the crosslinked rubber used for decomposition is derived from tires, grouping may be performed in advance according to the type of tire (for example, for passenger vehicles, for trucks and buses, for large vehicles such as off-road vehicles, for aircraft, for agricultural vehicles, etc.), and the decomposition process may be performed for each group. Alternatively, grouping may be performed in advance according to the tire component (for example, tread rubber, sidewall rubber, bead portion rubber, steel cord coating rubber, organic fiber coating rubber, pad rubber, cushion rubber, etc.), and the decomposition process may be performed for each group. Furthermore, both

grouping by tire type and grouping by tire component may be performed, and the decomposition process may be performed for each group. When the decomposition process is performed for each group in this way, a liquid polymer or recovered carbon black having more uniform physical properties can be obtained, and when blended again into a rubber composition, a rubber composition with better performance can be obtained.

The form of the crosslinked rubber is not particularly limited, and may be, for example, powdered rubber. Such powdered rubber can be obtained by cutting and pulverizing used rubber products such as waste tires. The pulverization process may include multiple steps such as a preliminary pulverization step and a fine pulverization step, and after the pulverization process, a classification step may be performed to adjust the particle size of the powdered rubber to be used.

The crosslinked rubber may be waste rubber subjected to recycling, used rubber products, etc. Waste rubber refers to all discarded rubber, not limited to that generated from rubber products, but also including unnecessary scraps generated during production or repair of rubber products. Examples of scraps include buffing dust and peeling rubber. Buffing dust is, for example, fine rubber generated in the buffing process of retreading tires, where the tread portion remaining on the base tire is shaved off. Peeling rubber is, for example, long rubber strips about 1-2 cm wide peeled from the surface of tires or other rubber products. Peeling rubber is generated by shaving the surface of tires or other rubber products using a knife with a U-shaped or V-shaped tip as a peeler. Rubber products include, for example, final products such as tires, rubber hoses, rubber conveyor belts, and rubber parts or components at the manufacturing stage of final products. Used tires may be those subjected to retreading, or waste tires generated by tire replacement, vehicle scrapping, or ELT (End-of-Life Tire) that have reached the end of their service life as tires, or those discarded for any reason.

-Diene Rubber-

The diene rubber is rubber containing units (diene units) derived from diene monomers, and may further contain units derived from copolymerizable comonomers.

The units derived from diene monomers enable crosslinking (vulcanization) of the diene rubber and impart elongation and strength characteristic of rubber. In the crosslinked rubber, the diene rubber is usually present in a crosslinked state, but a part may be uncrosslinked. Specific examples of diene monomers (diene compounds) include 1,3-butadiene, isoprene, 1,3-pentadiene, 2,3-dimethyl-1,3-butadiene, and the like. Among these, 1,3-butadiene and isoprene are preferred, and isoprene is particularly preferred.

On the other hand, examples of copolymerizable comonomers include aromatic vinyl compounds. Specific examples of such aromatic vinyl compounds include styrene, o-methylstyrene, m-methylstyrene, p-methylstyrene, o,p-dimethylstyrene, o-ethylstyrene, m-ethylstyrene, p-ethylstyrene, and the like.

Examples of the diene rubber include isoprene skeleton rubber, styrene-butadiene rubber (SBR), butadiene rubber (BR), chloroprene rubber (CR), and the like. Here, isoprene skeleton rubber is rubber having isoprene units as the main skeleton, and specific examples include natural rubber (NR), synthetic isoprene rubber (IR), and the like. Among these, it is preferable that the diene rubber contains at least one selected from the group consisting of isoprene skeleton rubber, styrene-butadiene rubber, and butadiene rubber, and isoprene skeleton rubber is particularly preferred. When the diene rubber contains at least one selected from the group consisting of isoprene skeleton rubber, styrene-butadiene rubber, and butadiene rubber, a liquid polymer containing a skeleton of a reusable diene monomer such as isoprene or butadiene can be obtained together with recovered carbon black by decomposition of the crosslinked rubber.

The content of the diene rubber in the crosslinked rubber is not particularly limited, and is preferably in the range of 10-100 mass%, and more preferably in the range of 30-100 mass% from the viewpoint of further improving the yield of liquid polymer containing a skeleton of a diene monomer and butadiene or isoprene.

-Carbon Black-

The carbon black is not particularly limited. For example, grades of carbon black include N134, N110, N220, N234, N219, N339, N330, N326, N351, N550, N762, and the like.

The content of carbon black in the crosslinked rubber is not particularly limited, and is, for example, in the range of 10-150 parts by mass per 100 parts by mass of the diene rubber, and preferably in the range of 30-120 parts by mass.

Furthermore, the content of carbon black in the crosslinked rubber is preferably 20 mass% or more, more preferably 30 mass% or more, and preferably 40 mass% or less, more preferably 35 mass% or less. When the content of carbon black in the crosslinked rubber is 20 mass% or more, the amount of recoverable carbon black increases.

-Other Components-

The crosslinked rubber may further contain, in addition to the above diene rubber and carbon black, various components commonly used in the rubber industry, such as rubber components other than diene rubber, fillers other than carbon black (silica, calcium carbonate, etc.), silane coupling agents, antioxidants, softeners, processing aids, resins,

surfactants, organic acids (such as stearic acid), zinc oxide (zinc white), vulcanization accelerators, crosslinking agents (sulfur, peroxides, etc.), and the like.

(Method for Decomposing Crosslinked Rubber)

The recovered carbon black of the present embodiment is obtained by decomposition of crosslinked rubber and can be obtained by, for example:

(i) a method of decomposing crosslinked rubber using a metathesis catalyst (first decomposition method),
(ii) a method of thermally decomposing crosslinked rubber at 150°C or higher and 400°C or lower (second decomposition method),
(iii) a method of decomposing crosslinked rubber in a solvent (third decomposition method), or
(iv) a method of decomposing crosslinked rubber using a radical initiator (fourth decomposition method).

These first, second, third, and fourth decomposition methods are decomposition at lower temperatures compared to conventional high-temperature thermal decomposition of crosslinked rubber, so that a sulfur component and a zinc component can be retained on the surface of the recovered carbon black, and the proportion of aggregates having a diameter of 5 μm or more can be reduced, while the proportion of aggregates having a diameter of 1 μm or less can be increased. Furthermore, in the first, second, third, and fourth decomposition methods, by appropriately selecting the decomposition conditions, the proportion of aggregates having a diameter of 5 μm or more and the proportion of aggregates having a diameter of 1 μm or less in the recovered carbon black can be controlled. The first, second, third, and fourth decomposition methods will be described in detail below.

-First Decomposition Method (Metathesis Decomposition)-

In the first decomposition method, crosslinked rubber is decomposed using a metathesis catalyst. Here, as the metathesis catalyst, a catalyst represented by the following general formula (1), (2), or (3):

[Chem. 1]

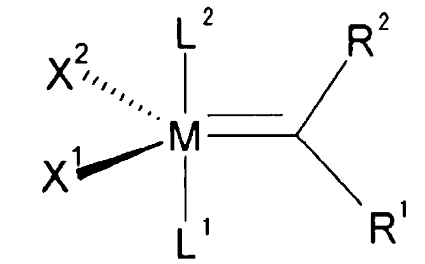

··· (1)

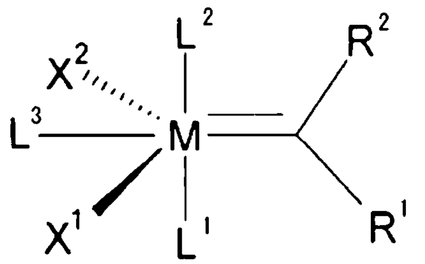

··· (2)

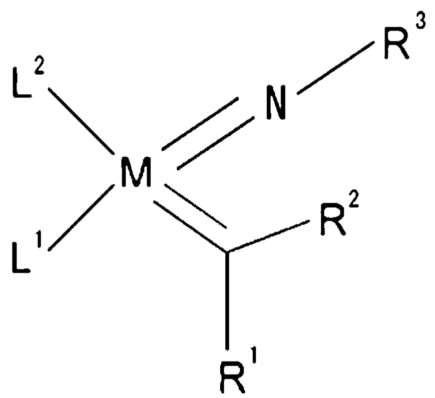

··· (3)

is preferred. The catalyst of general formula (1), (2), or (3) is excellent in promoting metathesis decomposition and can decompose diene rubber simply (under mild conditions) and rapidly.

In general formulae (1), (2), and (3) above, M is ruthenium (Ru), titanium (Ti), molybdenum (Mo), or tungsten (W). Among these, from the viewpoint of promoting the decomposition reaction of diene rubber in crosslinked rubber, ruthenium is preferred as M.

In the above general formulae (1) and (2), $X^1$ and $X^2$ each independently represent a ligand, and are preferably anionic ligands. Examples of $X^1$ and $X^2$ include hydrogen, halogen, pseudohalogen, a straight-chain or branched alkyl group having 1 to 30 carbon atoms, an aryl group having 6 to 24 carbon atoms, an alkoxy group having 1 to 20 carbon atoms, an aryloxy group having 6 to 24 carbon atoms, an alkyl diketonate having 3 to 20 carbon atoms, an aryl diketonate having 6 to 24 carbon atoms, a carboxylate having 1 to 20 carbon atoms, an alkyl sulfonate having 1 to 20 carbon atoms, an aryl sulfonate having 6 to 24 carbon atoms, an alkyl thiol group having 1 to 20 carbon atoms, an aryl thiol group having 6 to

24 carbon atoms, an alkyl sulfonyl group having 1 to 20 carbon atoms, or an alkyl sulfinyl group having 1 to 20 carbon atoms.

The above-mentioned $X^1$ and $X^2$ may be substituted with one or more further groups, for example, halogen (preferably fluorine), an alkyl group having 1 to 10 carbon atoms, an alkoxy group having 1 to 10 carbon atoms, or an aryl group having 6 to 24 carbon atoms, and these groups may further be substituted with one or more substituents selected from the group consisting of halogen (preferably fluorine), an alkyl group having 1 to 5 carbon atoms, an alkoxy group having 1 to 5 carbon atoms, and a phenyl group.

In a preferred embodiment, $X^1$ and $X^2$ may be the same or different, and each is a halogen (particularly, fluorine, chlorine, bromine, or iodine), benzoate, a carboxylate having 1 to 5 carbon atoms, an alkyl group having 1 to 5 carbon atoms, a phenoxy group, an alkoxy group having 1 to 5 carbon atoms, an alkyl thiol group having 1 to 5 carbon atoms, an arylthiol group having 6 to 24 carbon atoms, an aryl group having 6 to 24 carbon atoms, or an alkyl sulfonate having 1 to 5 carbon atoms.

In a particularly preferred embodiment, $X^1$ and $X^2$ are the same, and each is a halogen (particularly chlorine), $CF_3COO$, $CH_3COO$, $CFH_2COO$, $(CH_3)_3CO$, $(CF_3)_2(CH_3)CO$, $(CF_3)(CH_3)_2CO$, PhO (phenoxy), MeO (methoxy), EtO (ethoxy), tosylate (p-$CH_3$-$C_6H_4$-$SO_3$), mesylate (2,4,6-trimethylphenyl), or $CF_3SO_3$ (trifluoromethanesulfonate).

In the above general formulae (1), (2), and (3), $L^1$, $L^2$, and $L^3$ each independently represent a ligand, and are preferably neutral (uncharged) electron donors (also referred to as "electron-donating neutral ligands"). $L^1$, $L^2$, and $L^3$ may each independently be, for example, a phosphine, sulfonated phosphine, phosphate, phosphinic acid ester, phosphonite, arsine, stibine, ether, amine, amide, aryloxy, sulfonate, sulfoxide, carboxyl, nitrosyl, pyridine, thioether, or imidazolidine ligand. Preferably, $L^1$, $L^2$, and $L^3$ are each independently an aryl phosphine ligand having 6 to 24 carbon atoms, an alkyl phosphine or cycloalkyl phosphine ligand having 1 to 10 or 3 to 20 carbon atoms, respectively, a sulfonated aryl phosphine or sulfonated alkyl phosphine ligand having 6 to 24 or 1 to 10 carbon atoms, respectively, an aryl phosphinic acid ester or alkyl phosphinic acid ester ligand having 6 to 24 or 1 to 10 carbon atoms, respectively, an aryl phosphonite or alkyl phosphonite ligand having 6 to 24 or 1 to 10 carbon atoms, respectively, an aryl phosphite or alkyl phosphite ligand having 6 to 24 or 1 to 10 carbon atoms, respectively, an aryl arsine or alkyl arsine ligand having 6 to 24 or 1 to 10 carbon atoms, respectively, an arylamine or alkylamine ligand having 6 to 24 or 1 to 10 carbon atoms, respectively, a pyridine ligand, an aryl sulfoxide or alkyl sulfoxide ligand having 6 to 24 or 1 to 10 carbon atoms, respectively, an aryl ether or alkyl ether ligand having 6 to 24 or 1 to 10 carbon atoms, respectively, or an aryl amide or alkyl amide ligand having 6 to 24 or 1 to 10 carbon atoms, respectively, and these may each be substituted with a phenyl group, and the phenyl group may optionally be further substituted with halogen, an alkyl group having 1 to 5 carbon atoms, or an alkoxy group having 1 to 5 carbon atoms.

The term "phosphine" includes, for example, $PPh_3$, P(p-Tol)$_3$, P(o-Tol)$_3$, $PPh(CH_3)_2$, $P(CF_3)_3$, P(p-$FC_6H_4$)$_3$, P(p-$CF_3C_6H_4$)$_3$, $P(C_6H_4\text{-}SO_3Na)_3$, $P(CH_2C_6H_4\text{-}SO_3Na)_3$, P(isopropyl)$_3$, $P(CHCH_3(CH_2CH_3))_3$, P(cyclopentyl)$_3$, P(cyclohexyl)$_3$, P(neopentyl)$_3$, and P(neophenyl)$_3$.

The term "phosphinic acid ester" includes, for example, triphenyl phosphinate, tricyclohexyl phosphinate, triisopropyl phosphinate, and methyl diphenyl phosphinate.

The term "phosphite" includes, for example, triphenyl phosphite, tricyclohexyl phosphite, tri-tert-butyl phosphite, triisopropyl phosphite, and methyl diphenyl phosphite.

The term "stibine" includes, for example, triphenylstibine, tricyclohexylstibine, and trimethylstibine.

The term "aryloxy" includes, for example, 2-tert-butyl-4,5-dimethylphenoxy.

The term "sulfonate" includes, for example, trifluoromethanesulfonate, tosylate, and mesylate.

The term "sulfoxide" includes, for example, $(CH_3)_2S(=O)$ and $(C_6H_5)_2S=O$.

The term "thioether" includes, for example, $CH_3SCH_3$, $C_6H_5SCH_3$, $CH_3OCH_2CH_2SCH_3$, and tetrahydrothiophene.

The term "pyridine" includes, for example, pyridine, picolines ($\alpha$-, $\beta$-, and $\gamma$-picoline), lutidines (2,3-, 2,4-, 2,5-, 2,6-, 3,4-, and 3,5-lutidine), collidine (2,4,6-trimethylpyridine), trifluoromethylpyridine, phenylpyridine, 4-(dimethylamino) pyridine, chloropyridines, bromopyridines, nitropyridines, quinoline, pyrimidine, pyrrole, imidazole, and phenylimidazole.

In the imidazolidine ligand, the hydrogen atoms bonded to the carbon or nitrogen atoms constituting the imidazolidine ring may be substituted with a straight-chain or branched alkyl group having 1 to 30 carbon atoms, a cycloalkyl group having 3 to 20 carbon atoms, an alkenyl group having 2 to 20 carbon atoms, an alkynyl group having 2 to 20 carbon atoms, an aryl group having 6 to 24 carbon atoms, a carboxylate having 1 to 20 carbon atoms, an alkoxy group having 1 to 20 carbon atoms, an alkenyloxy group having 2 to 20 carbon atoms, an alkynyloxy group having 2 to 20 carbon atoms, an aryloxy group having 6 to 20 carbon atoms, an alkoxycarbonyl group having 2 to 20 carbon atoms, an alkylthio group having 1 to 20 carbon atoms, an arylthio group having 6 to 20 carbon atoms, an alkylsulfonyl group having 1 to 20 carbon atoms, an alkylsulfonate having 1 to 20 carbon atoms, an arylsulfonate having 6 to 20 carbon atoms, or an alkylsulfinyl group having 1 to 20 carbon atoms.

In the above general formulae (1), (2), and (3), $R^1$, $R^2$, and $R^3$ each independently represent hydrogen, an alkyl group, a cycloalkyl group, an alkenyl group, an alkynyl group, an aryl group, an aralkyl group, a carboxylate group, an alkoxy group, an alkenyloxy group, an alkynyloxy group, an aryloxy group, an alkoxycarbonyl group, an alkylamino group,

an alkylthio group, an arylthio group, an alkylsulfonyl group, or an alkylsulfinyl group, wherein these groups may each be substituted with one or more alkyl groups, halogen, alkoxy groups, aryl groups, or heteroaryl groups.

Further, as the alkyl group, an alkyl group having 1 to 30 carbon atoms is preferred; as the cycloalkyl group, a cycloalkyl group having 3 to 20 carbon atoms is preferred; as the alkenyl group, an alkenyl group having 2 to 20 carbon atoms is preferred; as the alkynyl group, an alkynyl group having 2 to 20 carbon atoms is preferred; as the aryl group, an aryl group having 6 to 24 carbon atoms is preferred; as the aralkyl group, an aralkyl group having 7 to 24 carbon atoms is preferred; as the carboxylate group, a carboxylate group having 1 to 20 carbon atoms is preferred; as the alkoxy group, an alkoxy group having 1 to 20 carbon atoms is preferred; as the alkenyloxy group, an alkenyloxy group having 2 to 20 carbon atoms is preferred; as the alkynyloxy group, an alkynyloxy group having 2 to 20 carbon atoms is preferred; as the aryloxy group, an aryloxy group having 6 to 24 carbon atoms is preferred; as the alkoxycarbonyl group, an alkoxycarbonyl group having 2 to 20 carbon atoms is preferred; as the alkylamino group, an alkylamino group having 1 to 30 carbon atoms is preferred; as the alkylthio group, an alkylthio group having 1 to 30 carbon atoms is preferred; as the arylthio group, an arylthio group having 6 to 24 carbon atoms is preferred; as the alkylsulfonyl group, an alkylsulfonyl group having 1 to 20 carbon atoms is preferred; and as the alkylsulfinyl group, an alkylsulfinyl group having 1 to 20 carbon atoms is preferred.

In one embodiment, one of $R^1$ and $R^2$ is hydrogen, and the other is an alkyl group having 1 to 20 carbon atoms, a cycloalkyl group having 3 to 10 carbon atoms, an alkenyl group having 2 to 20 carbon atoms, an alkynyl group having 2 to 20 carbon atoms, an aryl group having 6 to 24 carbon atoms, an aralkyl group having 7 to 24 carbon atoms, a carboxylate group having 1 to 20 carbon atoms, an alkoxy group having 1 to 20 carbon atoms, an alkenyloxy group having 2 to 20 carbon atoms, an alkynyloxy group having 2 to 20 carbon atoms, an aryloxy group having 6 to 24 carbon atoms, an alkoxycarbonyl group having 2 to 20 carbon atoms, an alkylamino group having 1 to 30 carbon atoms, an alkylthio group having 1 to 30 carbon atoms, an arylthio group having 6 to 24 carbon atoms, an alkylsulfonyl group having 1 to 20 carbon atoms, or an alkylsulfinyl group having 1 to 20 carbon atoms, and these groups may each be substituted with one or more alkyl groups, halogen, alkoxy groups, aryl groups, or heteroaryl groups.

In the above general formulae (1), (2), and (3), $L^1$ and $L^2$ may be bonded to each other to form a ring. The ring formed by the bonding of $L^1$ and $L^2$ may be aliphatic or aromatic, and may optionally be substituted and contain one or more hetero atoms. Examples of hetero atoms include oxygen, sulfur, nitrogen, and phosphorus.

In the above general formulae (1), (2), and (3), $R^1$ and $R^2$ may be bonded to each other to form a ring. The ring formed by $R^1$ and $R^2$ together with the common carbon atom to which they are bonded may be aliphatic or aromatic, and may optionally be substituted and contain one or more hetero atoms.

In the above general formulae (1), (2), and (3), $L^1$ and $R^1$ may be bonded to each other to form a ring. The ring formed by the bonding of $L^1$ and $R^1$ may be aliphatic or aromatic, and may optionally be substituted and contain one or more hetero atoms. Examples of hetero atoms include oxygen, sulfur, nitrogen, and phosphorus.

As the catalyst represented by the above general formula (1), catalysts represented by the following structural formulae (1-1) to (1-3):

[Chem. 2]

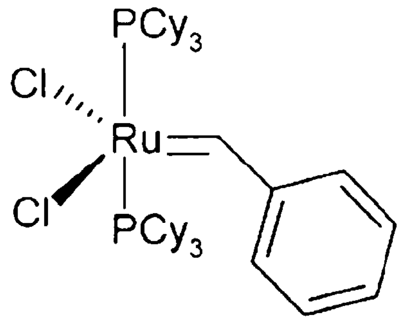

・・・(1-1)

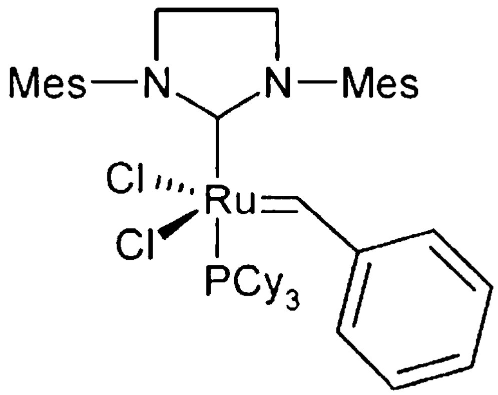

・・・(1-2)

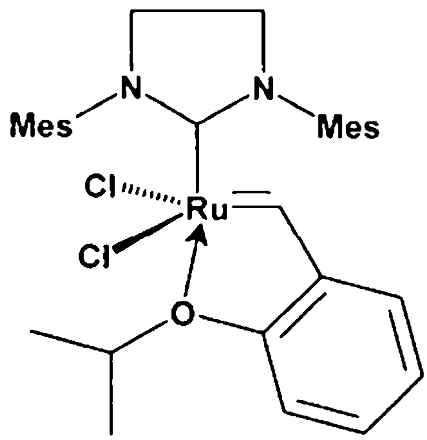

・・・(1-3)

[in the formulae, Cy represents a cyclohexyl group, and Mes represents a mesityl group (also referred to as "2,4,6-trimethylphenyl group")] are preferred.

The catalyst of structural formula (1-1) is referred to as a Grubbs first-generation catalyst, the catalyst of structural formula (1-2) is referred to as a Grubbs second-generation catalyst, and the catalyst of structural formula (1-3) is referred to as a Grubbs-Hoveyda second-generation catalyst. When a catalyst represented by any of the structural formulae (1-1) to (1-3) is used, the decomposition reaction (metathesis decomposition) of diene rubber in crosslinked rubber proceeds more rapidly.

As the catalyst represented by the above general formula (2), a catalyst represented by the following structural formula (2-1):

[Chem. 3]

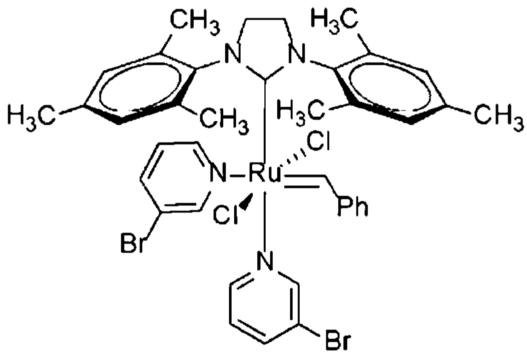

· · · (2-1)

is preferred. The catalyst of structural formula (2-1) is referred to as a Grubbs third-generation catalyst. When a catalyst represented by structural formula (2-1) is used, the decomposition reaction (metathesis decomposition) of diene rubber in crosslinked rubber proceeds more rapidly.

As the catalyst represented by the above general formula (3), a catalyst represented by the following structural formula (3-1):

[Chem. 4]

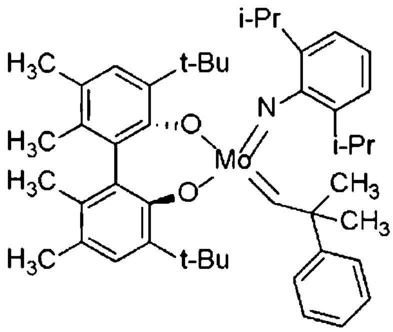

· · · (3-1)

can be mentioned.

The amount of the above catalyst used is preferably 0.1 parts by mass or more, more preferably 1 part by mass or more, and preferably 10 parts by mass or less, more preferably 8 parts by mass or less, per 100 parts by mass of the diene rubber. If the amount of the catalyst is 0.1 parts by mass or more per 100 parts by mass of the diene rubber, the decomposition reaction of the diene rubber proceeds further, and if the amount of the catalyst is 10 parts by mass or less per 100 parts by mass of the diene rubber, it is preferable from the viewpoint of cost.

The decomposition by the above metathesis catalyst (hereinafter sometimes simply referred to as "metathesis decomposition") is preferably carried out at 20°C or higher and 200°C or lower. By performing metathesis decomposition at 20°C or higher, the rate of the decomposition reaction of diene rubber in crosslinked rubber is improved, and by performing metathesis decomposition at 200°C or lower, decomposition of the catalyst (metathesis catalyst) represented by the above general formula (1), (2), or (3) can be suppressed, and after decomposition, the retention rate (selectivity) of the monomer skeleton of the diene rubber in the crosslinked rubber is improved. From the viewpoint of improving the decomposition reaction rate of diene rubber, the metathesis decomposition is more preferably performed at 25°C or higher, and from the viewpoint of suppressing decomposition of the metathesis catalyst and improving the selectivity of the product retaining the monomer skeleton, it is more preferably performed at 100°C or lower.

The metathesis decomposition can be carried out at any pressure, including reduced pressure, atmospheric pressure, or increased pressure. As an example, the reaction pressure is preferably 1 kPa to 10 MPa, more preferably 10 kPa to 1 MPa, and even more preferably 50 kPa to 500 kPa.

In the metathesis decomposition, the catalyst represented by the above general formula (1), (2), or (3) may be dissolved in a solvent, or the crosslinked rubber may be immersed in a solvent. By allowing the catalyst to act on the crosslinked rubber in a solvent, the decomposition reaction of diene rubber in the crosslinked rubber proceeds more easily.

Here, as the solvent, any solvent that does not inhibit the decomposition reaction can be used, and examples include ethers, aliphatic hydrocarbons, alicyclic hydrocarbons, and aromatic hydrocarbons (aromatic solvents). More specifically, preferred solvents include tetrahydrofuran (THF), hexane, cyclohexane, pentane, cyclopentane, toluene, and xylene, with toluene and tetrahydrofuran being more preferred. When the solvent is selected from tetrahydrofuran, hexane, cyclohexane, pentane, cyclopentane, toluene, and xylene, the decomposition reaction of diene rubber in crosslinked rubber proceeds even more easily.

The amount of the solvent used is preferably 10 mL or more, more preferably 50 mL or more, and preferably 500 mL or less, more preferably 200 mL or less, per 1 g of the crosslinked rubber. If the amount of the solvent is 10 mL or more per 1 g of the crosslinked rubber, the decomposition reaction of diene rubber in the crosslinked rubber proceeds further, and if the amount of the solvent is 500 mL or less per 1 g of the crosslinked rubber, it is preferable from the viewpoint of cost.

The metathesis decomposition may be carried out in the presence of a chain transfer agent (CTA). Examples of the chain transfer agent include cis-1,4-diacetoxy-2-butene, cis-1,4-dibenzyloxy-2-butene, and the like.

The amount of the chain transfer agent used is preferably in the range of 1 to 100 mol per 1 mol of the catalyst.

The recovered carbon black obtained by the above metathesis decomposition contains components derived from the metathesis catalyst, such as ruthenium (Ru), titanium (Ti), molybdenum (Mo), tungsten (W), phosphorus (P), and the like, and Ru, Ti, Mo, W, P, and the like derived from the metathesis catalyst can be used as markers. For example, by reusing the recovered carbon black obtained by metathesis decomposition in a rubber composition and measuring the content of Ru, Ti, Mo, W, P, and the like in the rubber composition, the content of the recovered carbon black in the rubber composition can be calculated.

-Second Decomposition Method (Low-Temperature Pyrolysis)-

In the second decomposition method, the crosslinked rubber is thermally decomposed at 150°C or higher and 400°C or lower. By performing thermal decomposition at 150°C or higher, the rate of the decomposition reaction of diene rubber in the crosslinked rubber is improved, and by performing thermal decomposition at 400°C or lower, gasification and aromatization of the decomposition products can be suppressed, and after decomposition, the retention rate (selectivity) of the monomer skeleton of the diene rubber in the crosslinked rubber is improved. From the viewpoint of improving the decomposition reaction rate of diene rubber, the thermal decomposition is preferably performed at 175°C or higher, more preferably at 190°C or higher. Also, from the viewpoint of improving the selectivity of the product retaining the monomer skeleton, it is preferably performed at 350°C or lower, more preferably at 300°C or lower.

The second decomposition method is preferably carried out under an inert gas atmosphere. By performing thermal decomposition under an inert gas atmosphere, oxidation and reduction of the decomposition products can be suppressed, and in particular, hydrogenation of double bonds in oligomers and monomers in the decomposition products can be suppressed. In addition, oxidation of the recovered carbon black can also be suppressed. Examples of the inert gas include nitrogen, carbon dioxide, argon, helium, and the like.

In order to perform the aforementioned thermal decomposition under an inert gas atmosphere, for example, when using a batch-type reactor, it suffices to set the atmosphere introduced into the reactor as an inert gas, and when using a flow-type reactor, it suffices to set the atmosphere flowing through the reactor as an inert gas. Note that, although hydrogen may be generated during the thermal decomposition, the hydrogen thus generated is not taken into account in the atmosphere for the thermal decomposition.

The aforementioned thermal decomposition can be carried out at any pressure, including under reduced pressure, at atmospheric pressure, or under increased pressure, but it is preferable to perform it under reduced pressure or at atmospheric pressure. As an example, the reaction pressure for the thermal decomposition is preferably 1000 kPa to 65 kPa. By performing the thermal decomposition under reduced pressure or at atmospheric pressure, it is possible to suppress the polymerization (repolymerization) of oligomers and monomers in the decomposition products.

The reaction time for the aforementioned thermal decomposition is not particularly limited. As an example, the reaction time for the thermal decomposition is preferably 1 minute to 180 minutes, more preferably 3 minutes to 60 minutes, and even more preferably 5 minutes to 30 minutes.

The aforementioned thermal decomposition may be performed with or without the use of a catalyst, but it is preferable not to use a catalyst. By not using a catalyst in the thermal decomposition, costs can be reduced. Note that, if a catalyst is used, any catalyst having an effect of promoting the decomposition reaction of the crosslinked rubber may be used.

-Third Decomposition Method (Solvolysis)-

In the third decomposition method, the crosslinked rubber is decomposed in a solvent. When the decomposition of the crosslinked rubber is performed in a solvent, the crosslinked rubber swells due to the solvent. By decomposing the crosslinked rubber under solvent swelling, it is possible to suppress gasification and aromatization of the decomposition

products, and, compared to conventional high-temperature thermal decomposition, it is possible to obtain decomposition products (liquid polymers) with a higher retention rate of the skeleton of the constituent monomers of the diene rubber (isoprene skeleton, butadiene skeleton, etc.).

As the aforementioned solvent, various solvents having a swelling effect on the crosslinked rubber can be used, and, for example, aromatic solvents, aliphatic solvents, alicyclic solvents, ester solvents, and the like can be used. Examples of aromatic solvents include benzene, toluene, xylene, and the like; examples of aliphatic solvents include pentane, hexane, heptane, and the like; examples of alicyclic solvents include cyclopentane, cyclohexane, and the like; and examples of ester solvents include ethyl acetate, propyl acetate, butyl acetate, and the like. Among these, as the aforementioned solvent, at least one selected from the group consisting of toluene, xylene, and cyclohexane is preferable, with toluene being particularly preferable. By using toluene, xylene, or cyclohexane as the solvent, it is possible to obtain decomposition products (liquid polymers) with a high retention rate of the skeleton of the constituent monomers of the diene rubber (isoprene skeleton, butadiene skeleton, etc.).

The amount of the aforementioned solvent used is preferably 1 mL or more per 1 g of the crosslinked rubber, more preferably 5 mL or more, and preferably 500 mL or less, more preferably 200 mL or less. If the amount of the aforementioned solvent used is 10 mL or more per 1 g of the crosslinked rubber, the decomposition reaction of the diene rubber in the crosslinked rubber proceeds further, and if the amount of the aforementioned solvent used is 500 mL or less per 1 g of the crosslinked rubber, it is preferable from the viewpoint of cost.

The temperature for decomposition in the aforementioned solvent is preferably 150°C to 300°C. By performing the decomposition in the solvent at 150°C or higher, the decomposition reaction rate of the diene rubber in the crosslinked rubber is improved, and by performing the decomposition in the solvent at 300°C or lower, it is possible to recover and reuse high-quality carbon black, and also to suppress gasification and aromatization of the decomposition products, and after decomposition, the retention rate (selectivity) of the skeleton of the constituent monomers of the diene rubber in the crosslinked rubber is improved. From the viewpoint of improving the decomposition reaction rate of the crosslinked rubber in the solvent, 180°C or higher is preferable, and 200°C or higher is more preferable. From the viewpoint of improving the selectivity of products retaining the monomer skeleton, 260°C or lower is preferable, and 240°C or lower is more preferable.

The decomposition time in the aforementioned solvent is not particularly limited. As an example, the decomposition time in the aforementioned solvent is preferably 1 hour to 48 hours, and more preferably 3 hours to 18 hours. By performing the decomposition in the solvent for 3 hours or more, the decomposition rate of the crosslinked rubber is improved. On the other hand, if the reaction time becomes too long, the skeleton (double bonds, etc.) of the constituent monomers of the diene rubber may be decomposed, or the decomposition products may be gasified or aromatized, but by performing the decomposition in the solvent for 18 hours or less, it is possible to suppress decomposition of the monomer skeleton and gasification or aromatization of the decomposition products, and after decomposition, the retention rate (selectivity) of the skeleton of the constituent monomers of the diene rubber in the crosslinked rubber is improved.

It is preferable to perform the decomposition in the aforementioned solvent under an inert gas atmosphere. By performing the decomposition in the solvent under an inert gas atmosphere, it is possible to reduce active species (such as oxygen and hydrogen) dissolved in the solvent, thereby suppressing oxidation and reduction of the decomposition products, and in particular, suppressing oxidation of the recovered carbon black, and also suppressing hydrogenation of double bonds in oligomers and monomers in the decomposition products. Here, examples of the inert gas include nitrogen, carbon dioxide, argon, helium, and the like.

In order to perform the decomposition in the aforementioned solvent under an inert gas atmosphere, for example, when using a batch-type reactor, it suffices to set the atmosphere introduced into the reactor as an inert gas, and when using a flow-type reactor, it suffices to set the atmosphere flowing through the reactor as an inert gas. Note that, although hydrogen may be generated during the decomposition in the solvent, the hydrogen thus generated is not taken into account in the atmosphere for the decomposition in the solvent.

The decomposition in the aforementioned solvent can be carried out at any pressure, including under reduced pressure, at atmospheric pressure, or under increased pressure. As an example, the reaction pressure is preferably 1 kPa to 10 MPa, more preferably 10 kPa to 5 MPa, and even more preferably 50 kPa to 2 MPa.

The decomposition in the aforementioned solvent may be performed with or without the use of a catalyst, but it is preferable not to use a catalyst. By not using a catalyst in the decomposition in the solvent, costs can be reduced. Note that, if a catalyst is used, any catalyst having an effect of promoting the decomposition reaction of the crosslinked rubber may be used.

-Fourth Decomposition Method (Radical Decomposition)-

In the fourth decomposition method, a radical initiator is applied to the crosslinked rubber under an atmosphere containing oxygen gas. The radical initiator is considered to act mainly on the crosslinking sites formed by sulfur, thereby cleaving the crosslinking bonds. Therefore, in the case of diene rubber, it is considered that the main chain skeleton is

basically maintained even after the decomposition reaction.

As the aforementioned radical initiator, various conventionally known types can be used, but from the viewpoint of reaction efficiency, peroxides and azo compounds are preferable, with peroxides being more preferably used.

Examples of peroxides include acyl peroxides, percarboxylic acids, dialkyl peroxides, alkyl hydroperoxides, and the like. Among these, from the viewpoint of reaction rate, acyl peroxides and percarboxylic acids are preferably used, with acyl peroxides being more preferably used.

Specific examples thereof include, as acyl peroxides: benzoyl peroxide, toluoyl peroxide, chlorobenzoyl peroxide, dichlorobenzoyl peroxide, methoxybenzoyl peroxide, phthaloyl peroxide, acetyl peroxide, propanoyl peroxide, caprylyl peroxide, decanoyl peroxide, lauroyl peroxide, myristoyl peroxide, stearoyl peroxide, and the like. Among acyl peroxides, from the viewpoints of reaction rate, cost, and ease of procurement, benzoyl peroxide, lauroyl peroxide, and acetyl peroxide are preferably used. From the viewpoints of reaction rate and stability of the peroxide, lauroyl peroxide is preferable to benzoyl peroxide.

Further, as percarboxylic acids, perbenzoic acid, chloroperbenzoic acid, peracetic acid, perpropionic acid, and the like can be mentioned. Furthermore, as dialkyl peroxides, di-tert-butyl peroxide, dicumyl peroxide, tert-butyl cumyl peroxide, and the like can be mentioned, and as alkyl hydroperoxides, tert-butyl hydroperoxide, cumene hydroperoxide, and the like can be mentioned.

On the other hand, as azo compounds, azobisisobutyronitrile, azobis-2,4-dimethylvaleronitrile, azobiscyclohexanecarbonitrile, azobisisobutyric acid methyl ester, and the like can be mentioned.

These radical initiators may be in a hydrated form from the viewpoints of safety and ease of procurement. By using a suitable initiator, the crosslinked rubber can be efficiently decomposed under mild conditions.

The amount of the aforementioned radical initiator used is preferably 0.1 parts by mass or more per 100 parts by mass of the crosslinked rubber, more preferably 1 part by mass or more, and preferably 30 parts by mass or less, more preferably 20 parts by mass or less. If the amount of the radical initiator used is 0.1 parts by mass or more per 100 parts by mass of the crosslinked rubber, the decomposition reaction of the crosslinked rubber proceeds more rapidly, and if the amount of the radical initiator used is 30 parts by mass or less per 100 parts by mass of the crosslinked rubber, it is preferable from the viewpoint of cost.

The aforementioned fourth decomposition method is carried out under an atmosphere containing oxygen gas. The concentration (vol%) of oxygen gas in the reaction atmosphere is usually 1 to 100%, preferably 1 to 80%, and more preferably 5 to 50%, including about 20%, which is the oxygen concentration in air. If the oxygen gas concentration is not 100%, the remaining gas component may be an inert gas such as nitrogen gas. Generally, the decomposition reaction of the fourth decomposition method is more advantageous at higher oxygen concentrations, but undesirable side reactions are also more likely to occur, so when the oxygen concentration is high, it is preferable to appropriately control the reaction time, reaction temperature, and the like.

On the other hand, when using air with an oxygen concentration of about 20%, there is no need to separately prepare oxygen gas, which is advantageous in terms of equipment and economy. In reactions under an air atmosphere, if the amount of crosslinked rubber is small, the reaction proceeds even in a closed system container with a sufficiently large internal volume. In such cases, the internal volume of the reaction vessel is generally 50 parts by volume or more, and more preferably 100 parts by volume or more, per 1 part by volume of crosslinked rubber.

When the fourth decomposition method is performed in a closed system, if the amount of crosslinked rubber increases, a reaction vessel with a large internal volume is required, which is not preferable from the viewpoint of equipment. Therefore, from the viewpoint of equipment, it is preferable to perform the reaction in an open system where air or the like can circulate. To make the reaction system open, methods such as opening part of the reaction vessel, attaching a membrane that allows circulation of air or the like, or causing air or the like to overflow can be considered. In addition, a method in which air or the like is continuously or intermittently blown into the solution during the reaction is also an advantageous form. There are no particular restrictions on the blowing rate in such cases, but it is usually 1 to 1000 mL/min, preferably 2 to 500 mL/min, and more preferably 3 to 200 mL/min per 1 g of crosslinked rubber.

In the aforementioned fourth decomposition method, the radical initiator may be dissolved in a solvent for use, or the crosslinked rubber may be immersed in a solvent for decomposition. By applying the radical initiator to the crosslinked rubber in a solvent, the decomposition of the crosslinked rubber is facilitated.

Here, as the aforementioned solvent, any solvent that does not inhibit the decomposition reaction can be used, and examples include aromatic hydrocarbons (aromatic solvents), chlorinated hydrocarbons, aliphatic hydrocarbons, alicyclic hydrocarbons, ethers, and the like.

Specifically, examples of aromatic hydrocarbons include toluene, xylene, ethylbenzene, trimethylbenzene, propylbenzene, and the like; examples of chlorinated hydrocarbons include chloroform, dichloromethane, dichloroethane, trichloroethane, tetrachloroethane, tetrachloroethylene, chlorobenzene, dichlorobenzene, and the like; examples of aliphatic hydrocarbons include pentane, hexane, octane, and the like; examples of alicyclic hydrocarbons include cyclopentane, cyclohexane, cyclooctane, and the like; and examples of ethers include tetrahydrofuran, methyltetrahydrofuran, tetrahydropyran, dioxane, and the like.

Among these, from the viewpoints of reaction rate and ease of procurement, aromatic hydrocarbons and chlorinated hydrocarbons are preferable. Specific examples thereof include toluene, xylene, ethylbenzene, chloroform, chlorobenzene, dichlorobenzene, and the like. Among aromatic hydrocarbons, from the viewpoint of reaction rate, ethylbenzene is preferable to toluene.

The solvent suitable for the decomposition reaction also depends on the type of crosslinked rubber. For example, in the case of crosslinked rubber of the NR type, IR type, or BR type, aromatic hydrocarbons and chlorinated hydrocarbons are preferable from the viewpoints of reaction rate and solubility of the products, and specific examples thereof include toluene, ethylbenzene, chloroform, chlorobenzene, and the like. On the other hand, in the case of crosslinked rubber of the SBR type, chlorinated hydrocarbons are more preferable from the viewpoint of reaction rate, and specific examples thereof include chloroform, chlorobenzene, and the like.

By using a preferable solvent, the decomposition of the crosslinked rubber is facilitated, and the liquid polymer can be produced more efficiently.

The amount of the aforementioned solvent used is preferably 2 mL or more per 1 g of the crosslinked rubber, more preferably 10 mL or more, and preferably 100 mL or less, more preferably 50 mL or less. If the amount of solvent used is 2 mL per 1 g of crosslinked rubber, the decomposition reaction of the crosslinked rubber is promoted, and if the amount of solvent used is 50 mL or less per 1 g of crosslinked rubber, it is preferable from the viewpoint of cost.

The aforementioned fourth decomposition method is preferably performed at 0°C or higher and 200°C or lower. By performing the fourth decomposition method at 0°C or higher, the decomposition reaction rate of the crosslinked rubber is improved, and by performing the fourth decomposition method at 200°C or lower, the retention rate (selectivity) of the monomer skeleton in the crosslinked rubber is improved.

The aforementioned fourth decomposition method is more preferably performed at 10°C or higher from the viewpoint of improving the decomposition reaction rate of the crosslinked rubber, and more preferably at 150°C or lower from the viewpoint of improving the selectivity of products retaining the monomer skeleton.

In addition, when using a peroxide-type radical initiator, the decomposition efficiency is high, so the reaction proceeds at a low temperature of 60°C or lower. Even near room temperature (20-30°C), the reaction proceeds smoothly, so there is no need for special equipment for heating or cooling, which is also an advantage when using a peroxide-type radical initiator.

The aforementioned fourth decomposition method can be carried out at any pressure, including under reduced pressure, at atmospheric pressure, or under increased pressure. Specifically, the reaction pressure is preferably 1 kPa to 10 MPa, more preferably 10 kPa to 1 MPa, and even more preferably 50 kPa to 500 kPa.

In the aforementioned fourth decomposition method, it is important to efficiently stir the raw crosslinked rubber, radical initiator, and solvent. As stirring methods, various conventionally known methods can be used, such as using a magnetic stirrer, a mechanical stirrer, or a shaker.

In addition, to promote the reaction, ultrasonic irradiation, microwave irradiation, light irradiation, and the like may also be used. These may also be used in combination.

-Other Decomposition Methods-

The method for decomposing crosslinked rubber to obtain the recovered carbon black of the present embodiment is not limited to the above-described first, second, third, and fourth decomposition methods, and any decomposition method may be used as long as the basic structure of the polymer is retained at 30% or more. Furthermore, a decomposition method in which the polymer structure is retained at 50% or more is more preferable, and a decomposition method in which the polymer structure is retained at 70% or more is even more preferable.

-Separation-

According to the above-described first, second, third, and fourth decomposition methods, the crosslinked rubber can be decomposed and reduced to a low molecular weight up to a liquid polymer. Therefore, after the decomposition reaction, for example, by centrifugation, filtration, or the like, the carbon black can be easily separated and collected from the decomposition products. Note that, in the present embodiment, it is preferable to obtain the recovered carbon black by centrifugation from the decomposition products after decomposition of the crosslinked rubber. By subjecting it to centrifugation, it is possible to easily obtain recovered carbon black in which a sulfur component and a zinc component are adhered to the surface, the proportion of aggregates with a diameter of 5 μm or more is 50 vol% or less, and the proportion of aggregates with a diameter of 1 μm or less is 50 vol% or more. Here, as the conditions for centrifugation, for example, a centrifugal acceleration in the range of 200 to 200,000 G is preferable, and a rotation time of 60 seconds to 180 minutes is preferable.

-Washing-

The recovered carbon black obtained by separation and collection as described above is preferably subjected to a washing step. By subjecting it to a washing step, it is possible to easily obtain recovered carbon black with few impurities. The washing is preferably performed with an organic solvent, for example. The recovered carbon black of the present embodiment described above has a proportion of aggregates with a diameter of 5 μm or more of 50 vol% or less, and preferably a proportion of aggregates with a diameter of 1 μm or less of 50 vol% or more, so it has excellent dispersibility in organic solvents, and by washing with an organic solvent, impurities can be easily reduced. Here, as the organic solvent, aromatic solvents such as toluene and xylene, aliphatic solvents such as hexane, and alicyclic solvents such as cyclohexane can be used.

-Drying-

The recovered carbon black that has undergone the washing step as described above is preferably subjected to room temperature drying, heat drying, or vacuum heat drying for the purpose of removing organic solvents and moisture. When performing heat drying or vacuum heat drying, the heating temperature is preferably 200°C or lower, more preferably 150°C or lower, and even more preferably 100°C or lower.

(Applications)

The recovered carbon black of the present embodiment can be used as a filler in rubber compositions for various rubber products.

In addition, the recovered carbon black of the present embodiment can also be used in black ink and the like, in addition to rubber compositions. Here, when used in black ink, it is preferable to use recovered carbon black with a fine particle size.

<Mixture of Recovered Carbon Black and Liquid Polymer>

A mixture of recovered carbon black and a liquid polymer according to a first embodiment of the present disclosure is a mixture of recovered carbon black and a liquid polymer obtained by decomposition of crosslinked rubber containing diene rubber and carbon black. In the mixture of the recovered carbon black and the liquid polymer of the first embodiment, the recovered carbon black is the recovered carbon black of the present embodiment described above (in other words, recovered carbon black in which the proportion of aggregates having a diameter of 5 μm or more is 50 vol% or less), and the liquid polymer is characterized by having a weight-average molecular weight of 300,000 or less.

Here, in the present specification, the term "liquid polymer" refers to a substance that is liquid at room temperature (23°C) and contains two or more diene monomer units.

The mixture of the recovered carbon black and the liquid polymer of the first embodiment can be obtained after decomposition of the above-described crosslinked rubber, without separating or collecting the recovered carbon black. By compounding the mixture of the recovered carbon black and the liquid polymer into a rubber composition without separating or collecting the recovered carbon black, the productivity of the rubber composition can be improved.

Furthermore, in such a mixture of the recovered carbon black and the liquid polymer of the first embodiment, when reused in a rubber composition, the liquid polymer acts as a softener, making it easier to knead the rubber composition.

In the mixture of the recovered carbon black and the liquid polymer of the first embodiment, the liquid polymer has a weight-average molecular weight of 300,000 or less, and preferably from 1,000 to 250,000. The weight-average molecular weight of the liquid polymer can be varied depending on the decomposition method and decomposition conditions of the crosslinked rubber. For example, according to the third decomposition method (solvent decomposition), it is easy to obtain a liquid polymer having a weight-average molecular weight of 500 to 30,000.

Note that, in the present specification, the weight-average molecular weight (Mw) is measured by gel permeation chromatography (GPC).

A mixture of recovered carbon black and a liquid polymer according to a second embodiment of the present disclosure is a mixture of recovered carbon black and a liquid polymer obtained by decomposition of crosslinked rubber containing diene rubber and carbon black. In the mixture of the recovered carbon black and the liquid polymer of the second embodiment, the recovered carbon black is the recovered carbon black of the present embodiment described above (in other words, recovered carbon black in which the proportion of aggregates having a diameter of 5 μm or more is 50 vol% or less), and the liquid polymer is characterized in that the proportion of components having a molecular weight of 15,000 or less is 30 mass% or less.

The mixture of the recovered carbon black and the liquid polymer of the second embodiment can be obtained

after decomposition of the above-described crosslinked rubber, by removing a part or all of the low molecular weight components in the liquid polymer without separating or collecting the recovered carbon black. By compounding the mixture of the recovered carbon black and the liquid polymer into a rubber composition without separating or collecting the recovered carbon black, the productivity of the rubber composition can be improved. Furthermore, by removing a part or all of the low molecular weight components in the liquid polymer, when the mixture of the recovered carbon black and the liquid polymer is compounded into a rubber composition, the plasticizing effect due to the low molecular weight components can be suppressed, making it easier to obtain a rubber composition having desired physical properties.

In the mixture of the recovered carbon black and the liquid polymer of the second embodiment, it is preferable that the proportion of components in the liquid polymer having a molecular weight of 15,000 or less is 30 mass% or less. When the proportion of components having a molecular weight of 15,000 or less is 30 mass% or less, the plasticizing effect can be suppressed, making it easier to obtain a rubber composition having desired physical properties.

Here, for measurement of molecular weight, gel permeation chromatography (GPC) is used.

In the mixture of the recovered carbon black and the liquid polymer of the first and second embodiments, it is preferable that the proportion of aggregates having a diameter of 1 μm or less, as determined using a particle size analyzer in a state where the recovered carbon black is dispersed ultrasonically in toluene solvent, is 50 vol% or more. Such a mixture of the recovered carbon black and the liquid polymer can maintain the physical properties of the resulting rubber composition even when reused in a rubber composition.

In the mixture of the recovered carbon black and the liquid polymer of the first and second embodiments, it is preferable that a sulfur component and a zinc component are adhered to the surface of the recovered carbon black. Such a mixture of the recovered carbon black and the liquid polymer can be obtained without washing or surface treatment of the carbon black.

<Rubber Composition>

A rubber composition according to a first embodiment of the present disclosure is characterized by comprising a rubber component and the above-described recovered carbon black. Since the rubber composition of the first embodiment contains the recovered carbon black of the present embodiment described above, it is possible to reduce environmental load while maintaining physical properties. Here, the compounding amount of the recovered carbon black is preferably in the range of 10 to 100 parts by mass per 100 parts by mass of the rubber component.

In addition, a rubber composition according to a second embodiment of the present disclosure is characterized by comprising a rubber component and the mixture of the recovered carbon black and the liquid polymer of the first embodiment of the present disclosure. Since the rubber composition of the second embodiment contains the above-described mixture of the recovered carbon black and the liquid polymer, it is possible to reduce environmental load while maintaining physical properties. Here, the compounding amount of the mixture of the recovered carbon black and the liquid polymer is preferably in the range of 10 to 100 parts by mass per 100 parts by mass of the rubber component.

Furthermore, a rubber composition according to a third embodiment of the present disclosure is characterized by comprising a rubber component and the mixture of the recovered carbon black and the liquid polymer of the second embodiment of the present disclosure (that is, a mixture from which a part or all of the low molecular weight components in the liquid polymer have been removed). Since the rubber composition of the third embodiment contains the above-described mixture of the recovered carbon black and the liquid polymer, it is possible to reduce environmental load while maintaining physical properties. Here, the compounding amount of the mixture of the recovered carbon black and the liquid polymer is preferably in the range of 10 to 100 parts by mass per 100 parts by mass of the rubber component.

The rubber compositions of the first, second, and third embodiments described above are all particularly suitable as rubber compositions for tires, since their physical properties, especially tensile strength (TB), are maintained.

The rubber compositions each contain a rubber component, and the rubber component imparts rubber elasticity to the composition. As the rubber component, diene rubber is preferred, and examples of the diene rubber include isoprene skeleton rubber, styrene-butadiene rubber (SBR), butadiene rubber (BR), and chloroprene rubber (CR). Here, isoprene skeleton rubber refers to rubber having isoprene units as the main skeleton, and specific examples include natural rubber (NR) and synthetic isoprene rubber (IR). These rubber components may be used alone or as a blend of two or more kinds.

The rubber composition may contain, in addition to the above-described rubber component, recovered carbon black, and the mixture of recovered carbon black and a liquid polymer, compounding agents commonly used in the rubber industry, such as fillers (carbon black, silica, calcium carbonate, etc.), silane coupling agents, antioxidants, wax, softeners, processing aids, resins, surfactants, organic acids (such as stearic acid), zinc oxide (zinc white), vulcanization accelerators, crosslinking agents (such as sulfur, peroxide), and the like.

In the rubber composition, the recovered carbon black of the present embodiment may be used in combination with unused carbon black or other recovered carbon black (that is, recovered carbon black other than recovered carbon black in which the proportion of aggregates having a diameter of 5 μm or more is 50 vol% or less). Here, the proportion of the recovered carbon black of the present embodiment in the total amount of carbon black is preferably 10 mass% or more,

and may be 100 mass%. The carbon black to be used in combination with the recovered carbon black of the present embodiment preferably has a dibutyl phthalate (DBP) absorption of 40 to 200 mL/100 g. In addition, the carbon black to be used in combination with the recovered carbon black of the present embodiment preferably has a nitrogen adsorption specific surface area ($N_2SA$) of 20 to 180 $m^2/g$.

Note that, in the present specification, the dibutyl phthalate (DBP) absorption of carbon black is determined in accordance with JIS K 6217-4:2017. Also, in the present specification, the nitrogen adsorption specific surface area ($N_2SA$) of carbon black is determined in accordance with JIS K 6217-2:2017.

In the rubber composition, the recovered carbon black of the present embodiment may be used in combination with silica. The silica to be used in combination with the recovered carbon black of the present embodiment preferably has an average particle size of 0.1 to 100 μm.

Note that, in the present specification, the average particle size of silica is the average value of the particle size measured by the light scattering method using a particle size analyzer.

Further, when the recovered carbon black of the present embodiment is compounded into a rubber composition, the rubber component of the rubber composition may be the same as or different from the diene rubber contained in the crosslinked rubber (that is, the raw material of the recovered carbon black of the present embodiment).

The recovered carbon black of the present embodiment may be compounded into a rubber composition as a wet masterbatch. When compounding as a wet masterbatch, the recovered carbon black of the present embodiment may be dispersed in any solvent (organic solvent, water, etc.) and compounded into the rubber composition, or may be compounded into the rubber composition as a mixture with the above-described liquid polymer.

<Rubber Product>

A rubber product of the present embodiment is characterized by comprising a rubber member formed from the rubber composition of the above-described first, second, or third embodiment. Since the rubber product of the present embodiment comprises a rubber member formed from the above-described rubber composition, its physical properties are maintained.

Examples of the rubber product of the present embodiment include tires, rubber crawlers, and seismic isolation rubber, among which tires are preferred. Among rubber products, tires have a large production volume, so by reusing the above-described recovered carbon black, the effect of reducing environmental load becomes particularly significant.

-Tire-

When the rubber product of the present embodiment is a tire, there is no particular limitation on the application site of the rubber composition of the present embodiment in the tire, and it can be appropriately selected according to the purpose; examples include tread, base tread, sidewall, side reinforcing rubber, and bead filler.

As a method for manufacturing the tire, a conventional method can be used. For example, on a tire-forming drum, members used in ordinary tire manufacturing, such as a carcass layer, belt layer, and tread layer made of unvulcanized rubber composition and/or cord, are sequentially laminated, the drum is removed to form a green tire, and then the green tire is heated and vulcanized according to a conventional method to manufacture a desired tire (for example, a pneumatic tire).

EXAMPLES

Hereinafter, the present disclosure will be described in more detail with reference to examples, but the present disclosure is not limited in any way to the following examples.

(1) Method for Analyzing Surface of Recovered Carbon Black
Using a product of JEOL Ltd., trade name "JEM-ARM200F atomic resolution analytical electron microscope," the elements present on the surface of the recovered carbon black were observed by transmission electron microscopy-energy dispersive X-ray spectroscopy (TEM-EDS).

(2) Method for Analyzing Aggregates of Recovered Carbon Black
A dispersion of the recovered carbon black to be tested was prepared in toluene solvent at an optimal concentration (0.1-2 wt%), and after dispersing for 5 minutes using an ultrasonic cleaning device at an output of 120 W and a frequency of 40 kHz, the particle size distribution was measured using "Mastersizer 3000" and "HydroSV" (both by Malvern Panalytical Ltd.). Under room temperature, toluene was used as the solvent and filled into the cell of "HydroSV," and while stirring at 500 rpm with a stirrer, the toluene dispersion of the recovered carbon black to be tested was added until the scattering intensity reached a value of 10-20%. The recovered carbon black to be tested was measured as non-spherical particles, with a refractive index of 1.746, and the refractive index of toluene was set to

1.49. From the obtained particle size distribution profile, the proportion of aggregates of the recovered carbon black to be tested having a diameter of 5 μm or more and the proportion of aggregates having a diameter of 1 μm or less were determined.

(3) Method for Analyzing Weight-Average Molecular Weight (Mw) of Liquid Polymer

The weight-average molecular weight (Mw) of the liquid polymer, in terms of polystyrene, was determined by gel permeation chromatography (hereinafter, sometimes referred to as GPC analysis; delivery unit: LC-20AB by Shimadzu Corporation; column: combination of KF-803 and KF-804 by Showa Denko K.K. or combination of G2000HXL and G4000HXL by Tosoh Corporation; detector: differential refractometer RID-10A by Shimadzu Corporation; analysis system: LabSolutions by Shimadzu Corporation; eluent: tetrahydrofuran), using monodisperse standard polystyrene as a reference. The measurement temperature was 40°C.

(Preparation of Crosslinked Rubber Sample)

A rubber composition was prepared by compounding, per 100 parts by mass of natural rubber, 50 parts by mass of carbon black [product name "N330" by Tokai Carbon Co., Ltd.], 2.0 parts by mass of antioxidant 6PPD [N-phenyl-N'-(1,3-dimethylbutyl)-p-phenylenediamine], 2.0 parts by mass of stearic acid, 2.25 parts by mass of zinc oxide, 0.6 parts by mass of vulcanization accelerator (N-cyclohexyl-2-benzothiazolylsulfenamide), and 1.8 parts by mass of sulfur, and the rubber composition was heat crosslinked to prepare crosslinked rubber. The obtained crosslinked rubber was cut into a shape of 3 mm × 3 mm × 2 mm to prepare a crosslinked rubber sample.

(Preparation of Recovered Carbon Black 1 - Metathesis Decomposition)

To 0.125 g of the above crosslinked rubber sample, 10 mL of tetrahydrofuran (THF) was added, and the rubber was swollen by stirring at 25°C for 24 hours. Next, 24 mg of Grubbs second-generation catalyst represented by the above structural formula (1-2) was added, and metathesis decomposition reaction was carried out by stirring at 25°C for a further 24 hours. After the reaction, the reaction was stopped by adding 10 mL of methanol and 2.5 mL of ethyl vinyl ether. No residual rubber sample remained after the reaction, and the decomposition rate of the rubber sample was calculated to be 100%. Subsequently, the solvent was distilled off under reduced pressure to obtain a mixture containing a liquid polymer and recovered carbon black. The obtained mixture was centrifuged using "CP80NX" (Eppendorf Himac Technologies Co., Ltd.) at a centrifugal acceleration of 112,000 g for 60 minutes to recover the recovered carbon black, and further, toluene solvent was added to the obtained recovered carbon black and centrifuged under the same conditions for washing.

When the surface of the recovered carbon black after washing was observed by TEM-EDS, it was found that ruthenium (Ru), phosphorus (P), zinc (Zn), and sulfur (S) were present on the surface. When the particle size distribution of the recovered carbon black was measured, the proportion of aggregates having a diameter of 5 μm or more was 24.1 vol%, and the proportion of aggregates having a diameter of 1 μm or less was 54.8 vol%.

Further, when the weight-average molecular weight (Mw) of the liquid polymer obtained by centrifugation was analyzed, it was 11,000.

(Preparation of Recovered Carbon Black 2 - Solvent Decomposition)

To a reactor, 0.4 g of the crosslinked rubber sample and 4 mL of toluene were added, and the decomposition reaction was carried out by stirring at 240°C for 9 hours under an Ar atmosphere. After the reaction, the mixture was separated into a solvent-soluble component, mainly consisting of liquid polymer, and a solvent-insoluble component, mainly consisting of carbon black.

The obtained solvent-insoluble component was centrifuged using "CP80NX" (Eppendorf Himac Technologies Co., Ltd.) at a centrifugal acceleration of 112,000 g for 60 minutes to collect the recovered carbon black, and further, toluene solvent was added to the obtained recovered carbon black and centrifuged under the same conditions for washing.

When the surface of the recovered carbon black after washing was observed by TEM-EDS, it was found that zinc (Zn) and sulfur (S) were present on the surface. When the particle size distribution of the recovered carbon black was measured, the proportion of aggregates having a diameter of 5 μm or more was 6.3 vol%, and the proportion of aggregates having a diameter of 1 μm or less was 84.8 vol%.

Further, when the weight-average molecular weight (Mw) of the liquid polymer obtained by centrifugation was analyzed, it was 28,000.

(Preparation and Evaluation of Rubber Composition)

A rubber composition was prepared in accordance with the formulation presented in Table 1. In addition to the components listed in Table 1, the rubber composition was compounded with, per 100 parts by mass of natural rubber

(rubber component), 2.0 parts by mass of antioxidant 6PPD [N-phenyl-N'-(1,3-dimethylbutyl)-p-phenylenediamine], 2.0 parts by mass of stearic acid, 2.25 parts by mass of zinc oxide, 0.6 parts by mass of vulcanization accelerator (N-cyclohexyl-2-benzothiazolylsulfenamide), and 1.8 parts by mass of sulfur.

The tensile strength (TB) of the obtained rubber composition was measured by the following method.

(4) Measurement of Tensile Strength (TB)

The rubber composition was vulcanized to prepare a vulcanized rubber test piece. A tensile test was conducted on the test piece in accordance with JIS K 6251, and the tensile strength (TB) was measured.

[Table 1]

| | | | Comparative Example 1 | Comparative Example 2 | Example 1 | Example 2 |
|---|---|---|---|---|---|---|
| Formulation | Natural rubber | Parts by mass | 100 | 100 | 100 | 100 |
| | Unused carbon black *1 | | 50 | - | - | 17 |
| | Commercially available recovered carbon black *2 | | - | 50 | - | - |
| | Recovered carbon black 1 *3 | | - | - | 50 | - |
| | Recovered carbon black 2 *4 | | - | - | - | 33 |
| Physical properties of main carbon black | Proportion of carbon black aggregates with diameter of 5 μm or more in toluene solvent | Vol% | - | 66.5 | 24.1 | 6.3 |
| | Proportion of carbon black aggregates with diameter of 1 μm or less in toluene solvent | Vol% | - | 4.1 | 54.8 | 84.8 |
| | Presence of sulfur component on surface | | Absent | Present | Present | Present |
| | Presence of zinc component on surface | | Absent | Present | Present | Present |
| Evaluation | Tensile strength (TB) | MPa | 27.8 | 22.2 | 26.9 | 27.9 |

*1 Unused carbon black: Manufactured by Tokai Carbon Co., Ltd., trade name "N330"
*2 Commercially available recovered carbon black:
Manufactured by Enrestec Co., trade name "PB365", proportion of aggregates with a diameter of 5 μm or more = 66.5 vol%, proportion of aggregates with a diameter of 1 μm or less = 4.1 vol%
*3 Recovered carbon black 1: Recovered carbon black obtained by metathesis decomposition, proportion of aggregates with a diameter of 5 μm or more = 24.1 vol%, proportion of aggregates with a diameter of 1 μm or less = 54.8 vol%
*4 Recovered carbon black 2: Recovered carbon black obtained by solvent decomposition, proportion of aggregates with a diameter of 5 μm or more = 6.3 vol%, proportion of aggregates with a diameter of 1 μm or less = 84.8 vol%

From Table 1, it can be seen that the rubber compositions of Examples 1 and 2, in which the recovered carbon black according to the present disclosure, having sulfur and zinc components adhered to the surface, a proportion of aggregates with a diameter of 5 μm or more of 50 vol% or less, and a proportion of aggregates with a diameter of 1 μm or less of 50 vol% or more, was compounded, have a tensile strength (TB) equivalent to that of the rubber composition of Comparative Example 1 in which unused carbon black was compounded.

On the other hand, it can be seen that the rubber composition of Comparative Example 2, in which commercially available recovered carbon black having a proportion of aggregates with a diameter of 5 μm or more exceeding 50 vol% was compounded, exhibits a significantly lower tensile strength (TB) compared to the rubber composition of Comparative Example 1 in which unused carbon black was compounded.

INDUSTRIAL APPLICABILITY

The recovered carbon black of the present disclosure can be used in rubber products such as tires, rubber

crawlers, and seismic isolation rubber.

## Claims

1. Recovered carbon black obtained by decomposition of crosslinked rubber containing diene rubber and carbon black, wherein
a proportion of aggregates having a diameter of 5 μm or more, as determined using a particle size analyzer in a state where the recovered carbon black is dispersed ultrasonically in toluene solvent, is 50 vol% or less.

2. The recovered carbon black according to claim 1, wherein a proportion of aggregates having a diameter of 1 μm or less, as determined using a particle size analyzer in a state where the recovered carbon black is dispersed ultrasonically in toluene solvent, is 50 vol% or more.

3. The recovered carbon black according to claim 1, wherein a sulfur component and a zinc component are adhered to a surface of the recovered carbon black.

4. A mixture of recovered carbon black and a liquid polymer obtained by decomposition of crosslinked rubber containing diene rubber and carbon black, wherein

    the recovered carbon black is the recovered carbon black according to claim 1, and
    the liquid polymer has a weight-average molecular weight of 300,000 or less.

5. A mixture of recovered carbon black and a liquid polymer obtained by decomposition of crosslinked rubber containing diene rubber and carbon black, wherein

    the recovered carbon black is the recovered carbon black according to claim 1, and
    a proportion of components having a molecular weight of 15,000 or less in the liquid polymer is 30 mass% or less.

6. The mixture of recovered carbon black and a liquid polymer according to claim 4 or claim 5, wherein the recovered carbon black has a proportion of aggregates having a diameter of 1 μm or less, as determined using a particle size analyzer in a state where the recovered carbon black is dispersed ultrasonically in toluene solvent, of 50 vol% or more.

7. The mixture of recovered carbon black and a liquid polymer according to claim 4 or claim 5, wherein a sulfur component and a zinc component are adhered to a surface of the recovered carbon black.

8. A rubber composition comprising a rubber component and the recovered carbon black according to claim 1.

9. A rubber composition comprising a rubber component and the mixture of recovered carbon black and a liquid polymer according to claim 4.

10. A rubber composition comprising a rubber component and the mixture of recovered carbon black and a liquid polymer according to claim 5.

11. The rubber composition according to any one of claims 8 to 10, wherein the rubber composition is for use in a tire.

12. A rubber product comprising a rubber member formed from the rubber composition according to any one of claims 8 to 10.

13. The rubber product according to claim 12, wherein the rubber product is a tire.

## INTERNATIONAL SEARCH REPORT

International application No.
**PCT/JP2024/027230**

**A. CLASSIFICATION OF SUBJECT MATTER**

***C09C 1/48***(2006.01)i; ***B60C 1/00***(2006.01)i; ***B60C 15/06***(2006.01)i; ***C08C 19/08***(2006.01)i; ***C08J 11/10***(2006.01)i; ***C08K 3/04***(2006.01)i; ***C08L 17/00***(2006.01)i; ***C08L 21/00***(2006.01)i; ***C09C 1/56***(2006.01)i
FI: C09C1/48; B60C1/00 A; B60C1/00 B; B60C1/00 Z; B60C15/06 B; C08C19/08; C08J11/10; C08K3/04; C08L17/00; C08L21/00; C09C1/56

According to International Patent Classification (IPC) or to both national classification and IPC

**B. FIELDS SEARCHED**

Minimum documentation searched (classification system followed by classification symbols)

C09C1/48; B60C1/00; B60C15/06; C08C19/08; C08J11/10; C08K3/04; C08L17/00; C08L21/00; C09C1/56

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-265664 A (THE YOKOHAMA RUBBER CO., LTD.) 18 September 2002 (2002-09-18)<br>claims 3-4, 6-13, paragraphs [0005]-[0012], [0015]-[0030], [0035]-[0044] | 1-13 |
| X | JP 2003-41045 A (THE YOKOHAMA RUBBER CO., LTD.) 13 February 2003 (2003-02-13)<br>claims 2-5, 7-12, paragraphs [0006]-[0044] | 1-13 |
| X | WO 2000/69953 A1 (THE YOKOHAMA RUBBER CO., LTD.) 23 November 2000 (2000-11-23)<br>claims 8, 26-29, p. 19, line 16 to p. 30, line 1, p. 42, line 15 to p. 44, line 13, examples 1, 4 | 1-13 |
| X<br>A | JP 2023-527426 A (EXXONMOBIL CHEMICAL PATENTS INC.) 28 June 2023 (2023-06-28)<br>claims 1, 17, paragraphs [0054], [0058], [0110], [0123], [0177]-[0186], example 15 | 1-3<br>4-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

## INTERNATIONAL SEARCH REPORT

International application No.
**PCT/JP2024/027230**

**C. DOCUMENTS CONSIDERED TO BE RELEVANT**

| Category* | Citation of document, with indication, where appropriate, of the relevant passages | Relevant to claim No. |
|---|---|---|
| X | CN 107556785 A (SICHUAN HOT-PULSE MICROWAVE TECHNOLOGY CO., LTD.) 09 January 2018 (2018-01-09) claim 1, example 1 | 1-3, 8, 11-13 |
| A | | 4-7, 9-10 |
| X | JP 7-310076 A (AGENCY OF IND SCIENCE & TECHNOL, BRIDGESTONE CORPORATION) 28 November 1995 (1995-11-28) claims 1-7, paragraphs [0019]-[0030], examples | 1-8, 11-13 |
| A | | 9-10 |
| X | JP 60-40193 A (FRIED KRUPP GMBH) 02 March 1985 (1985-03-02) claims, example 1 | 1-8, 11-13 |
| A | | 9-10 |
| X | JP 2020-523456 A (BRIDGESTONE CORPORATION) 06 August 2020 (2020-08-06) claims 1, 3, 7-10, paragraph [0004], examples, composition (C) | 1-3, 8, 11-13 |
| A | | 4-7, 9-10 |

Form PCT/ISA/210 (second sheet) (July 2022)

**INTERNATIONAL SEARCH REPORT**
**Information on patent family members**

International application No.
**PCT/JP2024/027230**

| Patent document cited in search report | Publication date (day/month/year) | Patent family member(s) | Publication date (day/month/year) |
|---|---|---|---|
| JP 2002-265664 A | 18 September 2002 | (Family: none) | |
| JP 2003-41045 A | 13 February 2003 | US 2003/0092783 A1<br>claims 1-6, 8-19, paragraphs [0007]-[0153] | |
| WO 2000/69953 A1 | 23 November 2000 | US 6525105 B1<br>claim 1, column 11, line 50 to column 17, line 62, column 25, line 32 to column 26, line 38, examples 1, 4<br>EP 1113041 A1<br>JP 2000-119438 A<br>JP 2001-226410 A<br>JP 2001-226520 A<br>JP 2001-226519 A<br>JP 2001-226521 A<br>JP 2001-323184 A | |
| JP 2023-527426 A | 28 June 2023 | US 2023/0220179 A1<br>claims 1, 17, example 15<br>WO 2021/242636 A1<br>EP 4157813 A1<br>CN 115996901 A | |
| CN 107556785 A | 09 January 2018 | (Family: none) | |
| JP 7-310076 A | 28 November 1995 | (Family: none) | |
| JP 60-40193 A | 02 March 1985 | US 4642401 A<br>claims 1-6, example 1<br>EP 132612 A1 | |
| JP 2020-523456 A | 06 August 2020 | US 2020/0189318 A1<br>claims 1, 3, 7-10, examples, compound (C)<br>WO 2019/002437 A1<br>EP 3645621 A1<br>CN 110832024 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3427975 A1